# EUROPEAN PATENT APPLICATION

(11) **EP 3 599 081 A1**
(43) Date of publication of application: **29.01.2020**
(21) Application number: 18209893.9
(22) Date of filing: 03.12.2018
(51) Int. Cl.: B29C 64/153, B29C 64/295

(54) **3D LASER PRINTER AND OPERATION METHOD THEREOF**

(30) Priority: 27.07.2018 CN 201810846144
(71) Applicant: XYZprinting, Inc., New Taipei City 22201 (TW); Kinpo Electronics, Inc., New Taipei City 22201 (TW)
(72) Inventor: HUANG, Chien-Hsing, 22201 New Taipei City (TW); WANG, Chun-Chieh, 22201 New Taipei City (TW); DIN, Shih-Jer, 22201 New Taipei City (TW)
(74) Representative: 2K Patentanwälte Blasberg Kewitz & Reichel

(57) **Abstract**

Disclosed are a 3D laser printer and its operation method. The 3D laser printer (10) includes a body (1), a powder paving mechanism (2), a mobile preheating mechanism (3) and a laser module (4). The body (1) has a chamber (11), a carrying platform (12) disposed in the chamber (11), and a feeding machine (13) and a construction machine (14) capable of descending and ascending with respect to the carrying platform (12). The powder paving mechanism (2) is accommodated in the chamber (11) and capable of moving reciprocately between the feeding machine (13) and the construction machine (14). The mobile preheating mechanism (3) is accommodated in the chamber (11) and capable of moving reciprocately in at least one of the feeding machine (13) and construction machine (14). The laser module (4) is configured to be corresponsive to the construction machine (14). Therefore, non-heat resistant components such as a color printer head and a motor can be installed into the chamber (11) directly to achieve the effects of diversified function and simple installation.

## Description

### BACKGROUND OF THE INVENTION

### TECHNICAL FIELD

The technical field relates to 3D printers, and more particularly to a 3D color printer and its operation method.

### DESCRIPTION OF RELATED ART

In Selective Laser Sintering (SLS), a paving roller is used to pave a layer of powder, the powder is heated by a heating device in a chassis chamber to a temperature just below its melting, a laser beam is projected onto the layer of powder until the temperature of the powder rises to its melting point for sintering, and then the powder is stuck with the portion as manufactured below. This process is repeated until the printing of the whole 3D object is completed.

However, the heating device heats up the whole chassis chamber. When the chassis chamber is heated to a predetermined temperature, the powder is naturally heated to a predetermined temperature as well. If the temperature of the chassis chamber is too high, only heat resistant components can be installed in the chassis chamber, and non-heat resistant components such as a color printer head, a motor, etc. have to be omitted or installed outside the chassis chamber. Obviously, the conventional 3D laser printer has the drawbacks of poor function, complicated installation, etc.

In view of the aforementioned drawbacks of the prior art, the discloser of this disclosure based on years of experience in the related industry to conduct extensive research and experiment, and finally developed a 3D laser printer and its operation method to overcome the drawbacks of the prior art.

### SUMMARY OF THE INVENTION

This disclosure is directed to a 3D laser printer and its operation method, wherein a mobile preheating mechanism is provided for heating a feeding machine or a construction machine, and thus omitting the step of using a heating device to heat up the whole chassis chamber, and preventing the temperature of a chamber of a body of this disclosure body from being too high. Further, non-heat resistant components such as a color printer head, a motor, etc. can be installed in the chamber directly to achieve the effects of diversified function and simple installation.

To achieve the aforementioned and other objectives, this disclosure provides a 3D laser printer, comprising: a body, having a chamber formed therein, a carrying platform disposed in the chamber, and a feeding machine and a construction machine capable of ascending and descending with respect to the carrying platform; a powder paving mechanism, accommodated in the chamber and reciprocately moved between the feeding machine and the construction machine; a mobile preheating mechanism, accommodated in the chamber and reciprocately moved in at least one of the feeding machine and the construction machine; and a laser module, configured to be corresponsive to the construction machine.

To achieve the aforementioned and other objectives, this disclosure also provides an operation method of a 3D laser printer comprising the steps of: (a) providing a powder to be sintered and a body, wherein the body has a chamber formed therein a carrying platform disposed in the chamber, and a feeding machine and a construction machine capable of ascending and descending with respect to the carrying platform to stack the powder to be sintered onto the feeding machine; (b) providing a powder paving mechanism accommodated in the chamber and reciprocately moved between the construction machine and the feeding machine, wherein the powder paving mechanism is provided for paving the powder to be sintered onto the construction machine from the feeding machine; (c) providing a mobile preheating mechanism accommodated in the chamber and reciprocately moved in at least one of the feeding machine and the construction machine, wherein the mobile preheating mechanism is provided for heating the powder to be sintered to a temperature slightly lower than the melting point of the powder to be sintered; (d) providing a laser module configured to be corresponding to the construction machine, wherein the laser module is provided for heating the powder to be sintered to the melting point of the powder to be sintered according to the required figure in order to sinter the powder to be sintered into a construction layer; (e) descending the construction machine with respect to the carrying platform until the powder to be sintered is paved smoothly onto the construction machine; and (f) forming a finished product by the plurality of construction layers after repeating the steps (a) to (e).

In the aforementioned 3D laser printer, the mobile preheating mechanism is configured to be corresponsive to the construction machine, and the mobile preheating mechanism includes a moving seat and a heating element, and after the heating element heats the powder to be sintered, the laser module immediately sinters the powder to be sintered to prevent affecting the sintering operation caused by a drop of the temperature of the powder to be sintered.

In the aforementioned 3D laser printer, the powder paving mechanism and the mobile preheating mechanism are jointly combined onto the same moving seat, so that the powder to be sintered can be paved onto the construction machine simultaneously and heated and sintered to achieve the effect of saving the manufacturing time of the 3D laser printer.

### BRIEF DESCRIPTION OF THE DRAWINGS

FIG. 1 is a perspective view of a 3D laser printer in accordance with a first embodiment of this disclosure;
FIG. 2 is a cross-sectional view of the 3D laser printer in accordance with the first embodiment of this disclosure;
FIG. 3 is a flow chart of an operation method of a 3D laser printer in accordance with this disclosure;
FIG. 4 is a schematic view of setting a powder to be sintered onto a feeding machine by a feeding mechanism in accordance with this disclosure;
FIG. 5 is a schematic view of paving the powder to be sintered onto a construction machine by a powder paving mechanism in accordance with this disclosure;
FIG. 6 is a schematic view of heating the powder to be sintered to a temperature slightly lower than melting point by a mobile preheating mechanism in accordance with this disclosure;
FIG. 7 is a schematic view of sintering the powder to be sintered into a construction layer in accordance with this disclosure;
FIG. 8 is a schematic view of cooling the construction layer by a cooling mechanism which is configured to be corresponsive to the construction machine in accordance with this disclosure;
FIG. 9 is a schematic view of coloring the construction layer according to the required color and position by a color printer head in accordance with this disclosure;
FIG. 10 is a perspective view of a 3D laser printer in accordance with a second embodiment of this disclosure;
FIG. 11 is a cross-sectional view of a 3D laser printer in accordance with a third embodiment of this disclosure; and
FIG. 12 is a cross-sectional view of a 3D laser printer in accordance with a fourth embodiment of this disclosure.

### DESCRIPTION OF THE PREFERRED EMBODIMENTS

The technical contents of this disclosure will become apparent with the detailed description of preferred embodiments accompanied with the illustration of related drawings as follows. It is noteworthy that same numerals are used for representing same respective elements in the drawings.

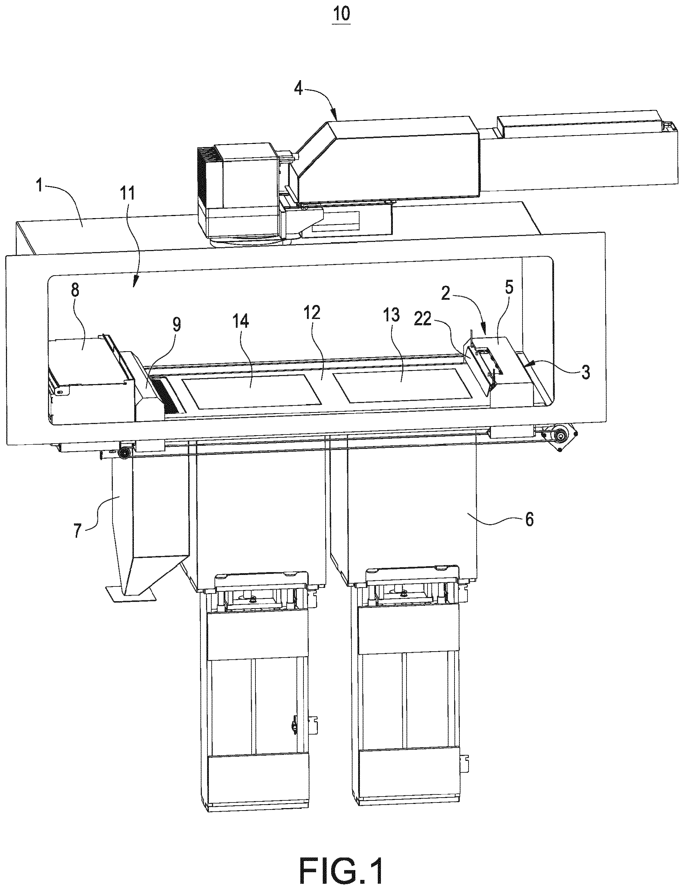

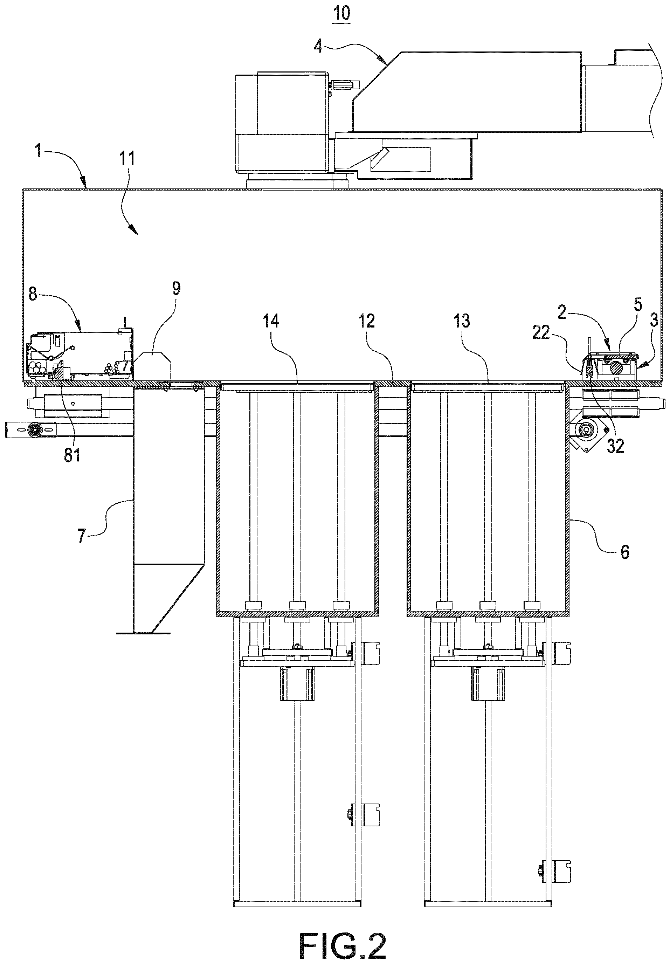

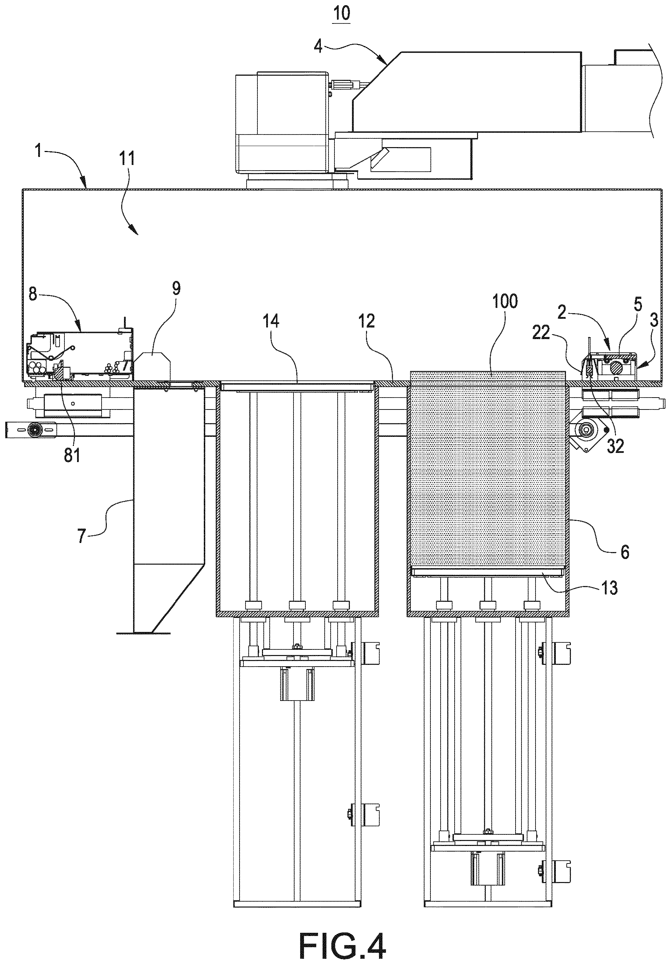

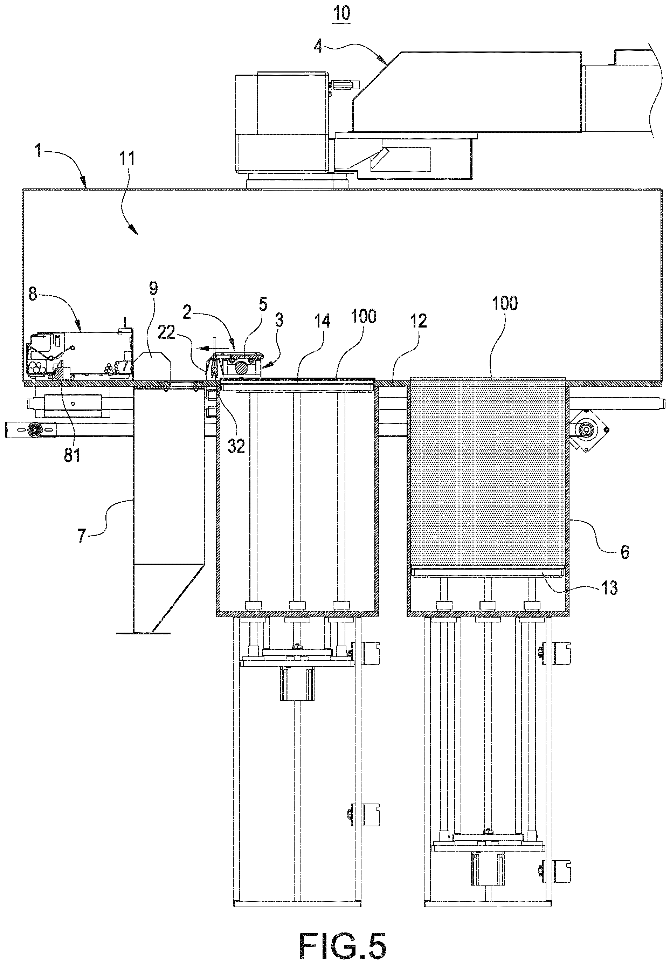

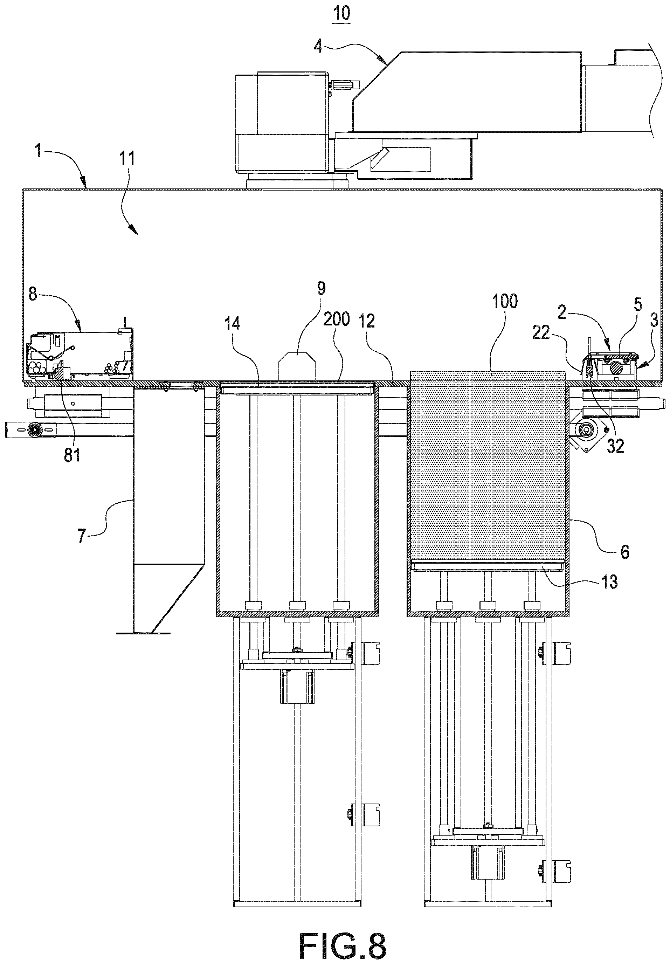

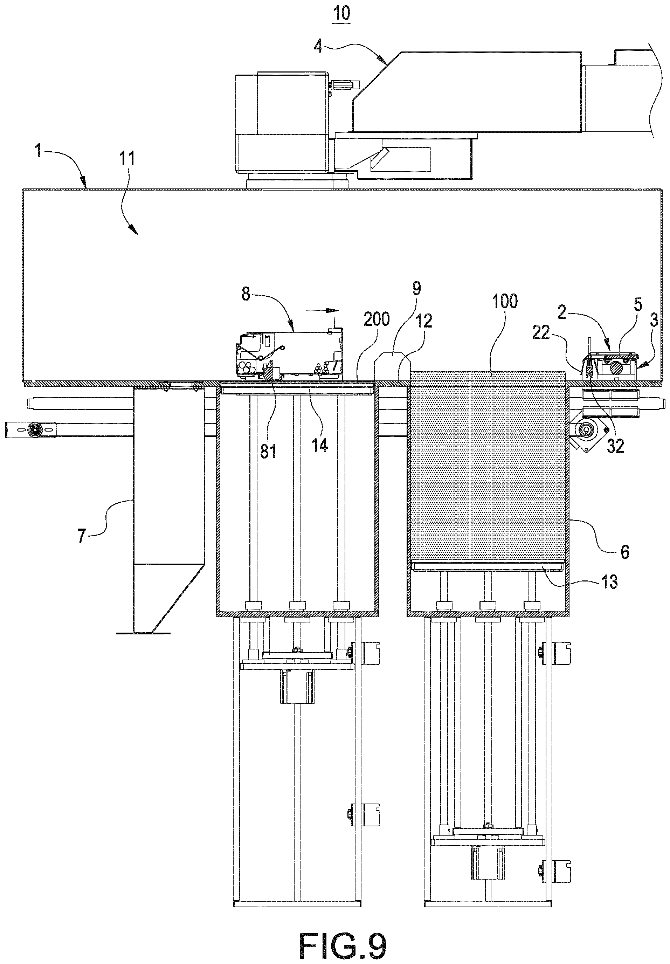

With reference to FIGS. 1 to 9 for a 3D laser printer and its operation method of the first embodiment of this disclosure, the 3D laser printer 10 comprises a body 1, a powder paving mechanism 2, a mobile preheating mechanism 3, and a laser module 4.

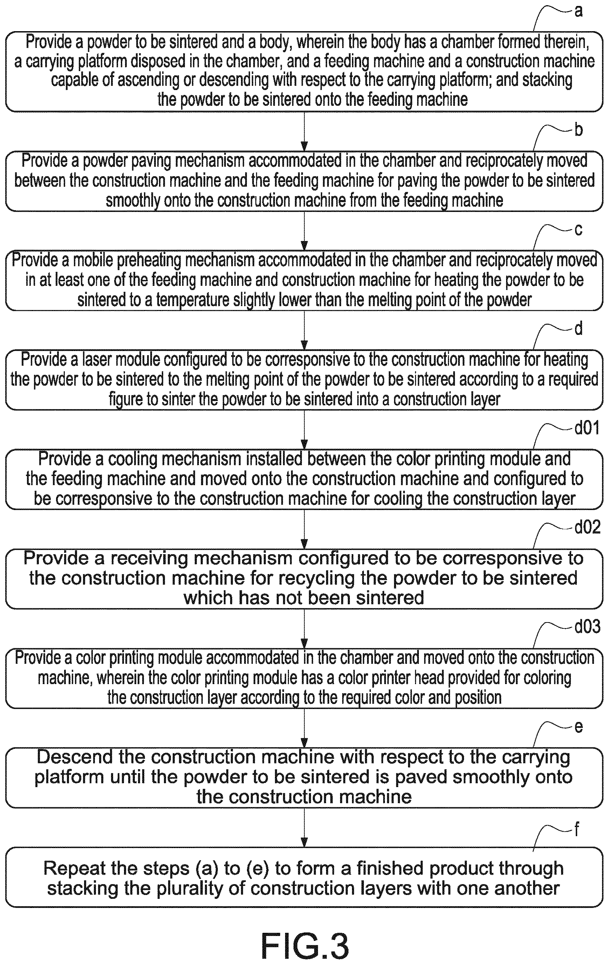

With reference to FIG. 3 for an operation method of a 3D laser printer of this disclosure 3D laser printer 10, the operation method comprises the following steps. In the step (a) as shown in FIG. 3 as well as FIGS. 1, 2, and 4, a powder to be sintered 100 and a body 1 are provided, wherein the body 1 has a chamber 11 formed therein, a carrying platform 12 disposed in the chamber 11, and a feeding machine 13 and a construction machine 14 capable of ascending with respect to the carrying platform 12 to stack the powder to be sintered 100 onto feeding machine 13.

Specifically, the 3D laser printer 10 further comprises a feeding mechanism 6 configured to be corresponsive to the feeding machine 13 and provided for stacking the powder to be sintered 100 onto the feeding machine 13. Wherein, the feeding mechanism 6 of this embodiment is disposed under the feeding machine 13 and has a feeding slot for accommodating the feeding machine 13. However, this disclosure is not limited to such arrangement only, and the feeding mechanism 6 may be a feeding bucking disposed at the top of the feeding machine 13.

With reference to the step (b) as shown in FIG. 3 as well as FIGS. 1, 2, and 5, a powder paving mechanism 2 is provided, accommodated in the chamber 11 and reciprocately moved between the feeding machine 13 and the construction machine 14, wherein the powder paving mechanism 2 is provided for paving the powder to be sintered 100 smoothly onto the construction machine 14 from the feeding machine 13.

With reference to the step (c) as shown in FIG. 3 as well as FIGS. 1, 2 and 6, a mobile preheating mechanism 3 is provided, accommodated in the mobile preheating mechanism 3, and reciprocately moved in at least one of the feeding machine 13 and the construction machine 14, wherein the mobile preheating mechanism 3 is provided for heating the powder to be sintered 100 to a temperature slightly lower than the melting point of the powder to be sintered 100.

Further, the powder paving mechanism 2 and the mobile preheating mechanism 3 jointly include a moving seat 5, and the powder paving mechanism 2 further includes a powder paving module 22 installed at the moving seat 5 and moved with the moving seat 5, and the mobile preheating mechanism 3 further includes a heating element 32 installed at the moving seat 5 and moved with the moving seat 5, wherein the heating element 32 heats the powder to be sintered 100 to a temperature slightly lower than the melting point of the powder to be sintered 100. Wherein, the heating element 32 is a radiant heat source which is an infrared light source (such as an IR Lamp) or a radiant heat source (such as an electric heating tube).

In addition, the mobile preheating mechanism 3 of this embodiment is reciprocately moved between the feeding machine 13 and construction machine 14, but this disclosure is not limited to such arrangement only. The mobile preheating mechanism 3 of this disclosure may just heat one of the feeding machine 13 and the construction machine 14 only. Compared with the conventional heating device that heats the whole chassis chamber, this disclosure is significantly different.

In addition, when the heating element 32 is the infrared light source and the spacing between the infrared light source and the powder to be sintered 100 is smaller than 10mm, the infrared light source heats the powder to be sintered 100 within a short distance apart to prevent a large quantity of heat from dispersing to other areas and non-heat resistant components such as the color printer head and motor in the chamber 11 from being damaged by high temperature.

With reference to the step (d) as shown in FIG. 3 as well as FIGS. 1, 2, and 7, a laser module 4 is provided and configured to be corresponsive to the construction machine 14, wherein the laser module 4 is provided for heating the powder to be sintered 100 to the melting point of the powder to be sintered 100 according to the required figure, so as to sinter the powder to be sintered 100 into a construction layer 200.

With reference to FIGS. 3, 8, and 9, the operation method further comprises the steps d01, d02, and d03 between the step (d) and the step (e). In step d01, a cooling mechanism 9 and a color printing module 8 are provided, and the cooling mechanism 9 is installed between the color printing module 8 and the feeding machine 13, and moved on the construction machine 14, and configured to be corresponsive to the construction machine 14 for cooling the construction layer 200. In the step d02, a receiving mechanism 7 is provided and configured to be corresponsive to the construction machine 14, wherein the receiving mechanism 7 is provided for recycling the powder to be sintered 100 which is not sintered.

Wherein, the cooling mechanism 9 of this embodiment is disposed at the front of the color printing module 8 and moved with the color printing module 8, so that the 3D laser printer 10 has the effect of cooling before coloring.

In the step d03, the color printing module 8 is accommodated in the chamber 11 and moved on the construction machine 14, wherein the color printing module 8 has a color printer head 81 for coloring according to the required color and position.

Wherein, the workflow order of the step d01 and the step d02 may be switched and the step d01 mainly cools the construction layer 200 and protects the color printer head 81, so as to prevent the color printer head 81 from being damaged by high temperature. However, the step d01 is non-essential and may be skipped according to actual requirements.

With reference to the step (e) as shown in FIG. 3 as well as FIGS. 1 and 2, the construction machine 14 is descended with respect to the carrying platform 12, and the powder to be sintered 100 is paved smoothly on the construction machine 14.

With reference to the step (f) and as shown in FIG. 3 as well as FIGS. 1 and 2, a finished good is formed by stacking the plurality of construction layers 200 with one another after repeating the steps (a) to (e).

In addition, the workflow order of the steps (b) and (c) may be switched, and when the mobile preheating mechanism 3 is configured to be corresponsive to the construction machine 14, the step (c) is arranged behind the step (b). In other words, the powder to be sintered 100 is paved smoothly onto the construction machine 14 first, and then the mobile preheating mechanism 3 heats the powder to be sintered 100. When the mobile preheating mechanism 3 is configured to be corresponsive to the feeding machine 13, the step (c) is arranged before the step (b). In other words, the mobile preheating mechanism 3 heats the powder to be sintered 100 first, and then the powder to be sintered 100 is paved smoothly onto the construction machine 14.

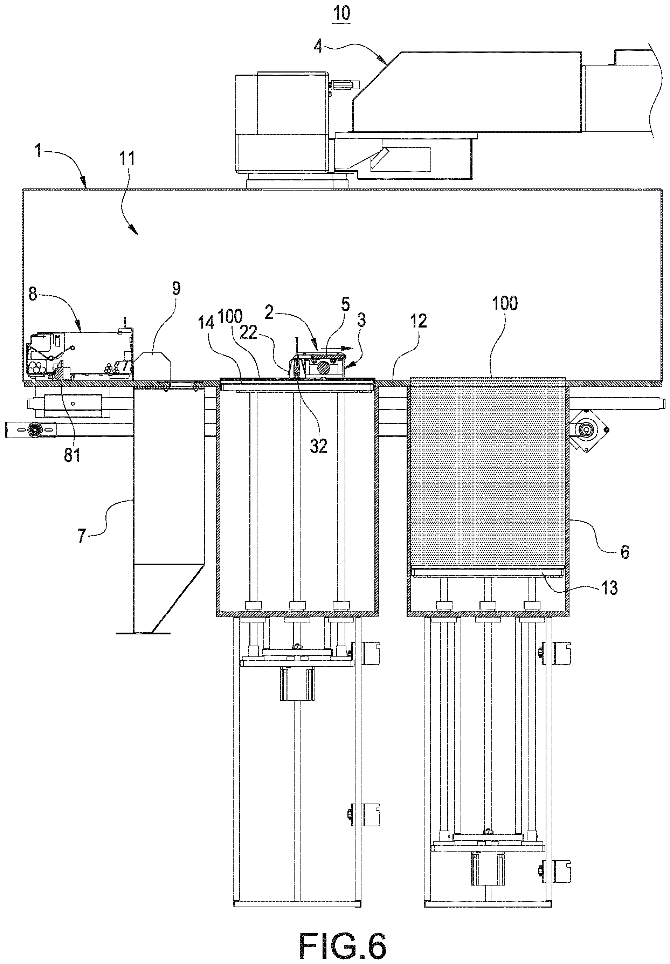

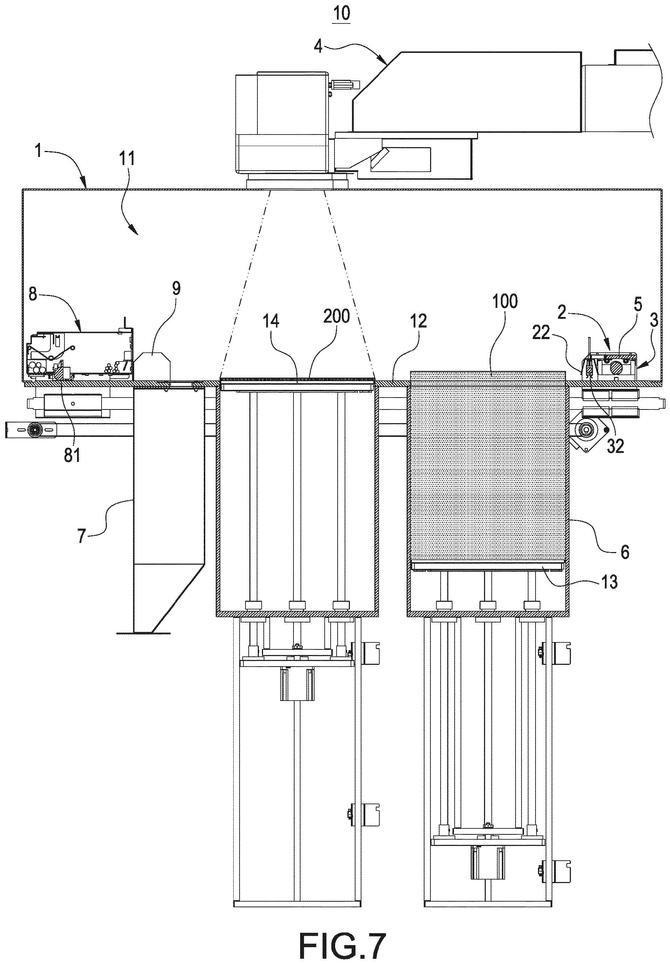

With reference to FIGS. 6 and 7 for the using status of the 3D laser printer 10 of this disclosure, the 3D laser printer 10 heats the feeding machine 13 or the construction machine 14 by the mobile preheating mechanism 3 in order to skip the step of using a conventional heating device to heat the whole chassis chamber, so that the temperature of the chamber 11 of the body 1 of this disclosure will not be too high, and non-heat resistant components such as the color printer head 81 and the motor can be installed directly in the chamber 11, and the 3D laser printer 10 can add the color printing function, and the moving seat 5 or the powder paving module 22 can be installed with a motor, so as the to achieve the 3D laser printer 10 has the effects of diversified function and simple installation.

In a preferred embodiment, the mobile preheating mechanism 3 is configured corresponsive to the construction machine 14, and the mobile preheating mechanism 3 includes a moving seat 5 and a heating element 32, wherein the heating element 32 heats the powder to be sintered 100, and then the laser module 4 sinters the powder to be sintered 100 according to the required figure to prevent affecting the sintering operation due to a drop of temperature of the powder to be sintered 100.

In addition, the powder paving mechanism 2 and the mobile preheating mechanism 3 are jointly combined onto the same moving seat 5, so that the powder to be sintered 100 can be paved smoothly onto the construction machine 14, heated and sintered, so as to achieve the effects of saving the quantity of powder used, reducing the heating and sintering time, and saving the manufacturing time of the 3D laser printer 10.

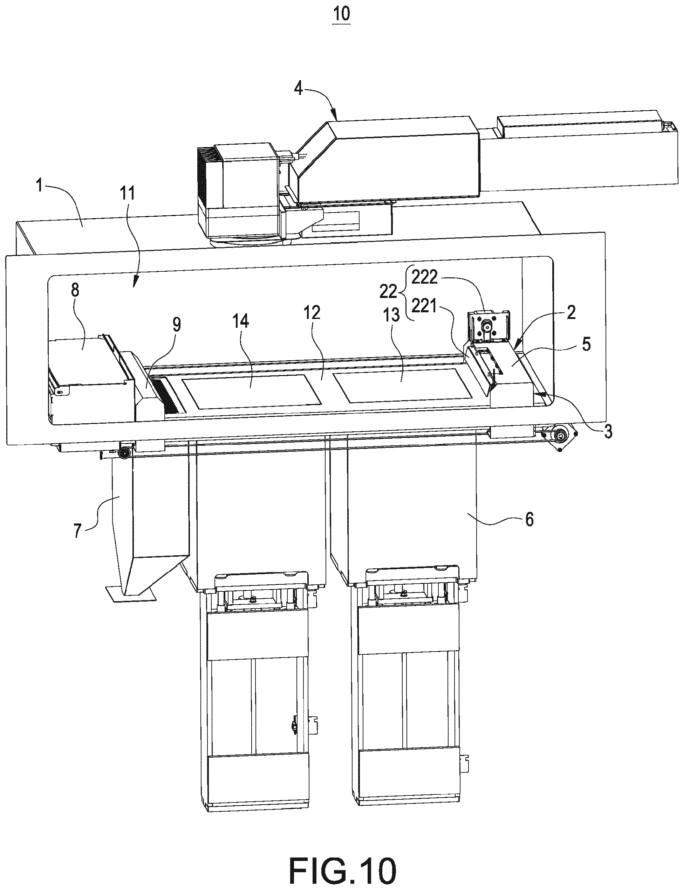

With reference to FIG. 10 for a 3D laser printer in accordance with the second embodiment of this disclosure, the second embodiment and the first embodiment are substantially the same, except that the structure of the powder paving module 22 of the second embodiment is different from that of the first embodiment.

Specifically, the powder paving module 22 incudes a powder roller 221 and a driver 222 coupled to the powder roller 221 for driving the powder roller 221 to roll, wherein the driver 222 may be a motor, and the powder roller 221 is provided for paving the powder to be sintered 100 onto the construction machine 14 from the feeding machine 13. Since the temperature of the chamber 11 of the body of this disclosure body 1 is not too high, non-heat resistant components such as the driver 222 can be installed directly into the chamber 11 to allow the powder roller 221 to roll, so as to improve the powdering efficiency of the 3D laser printer 10.

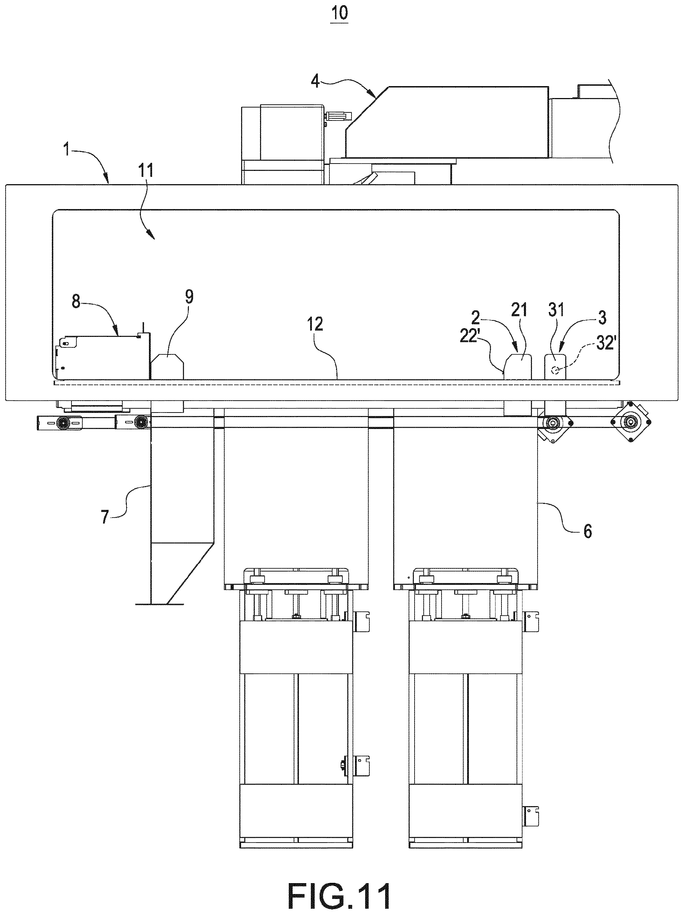

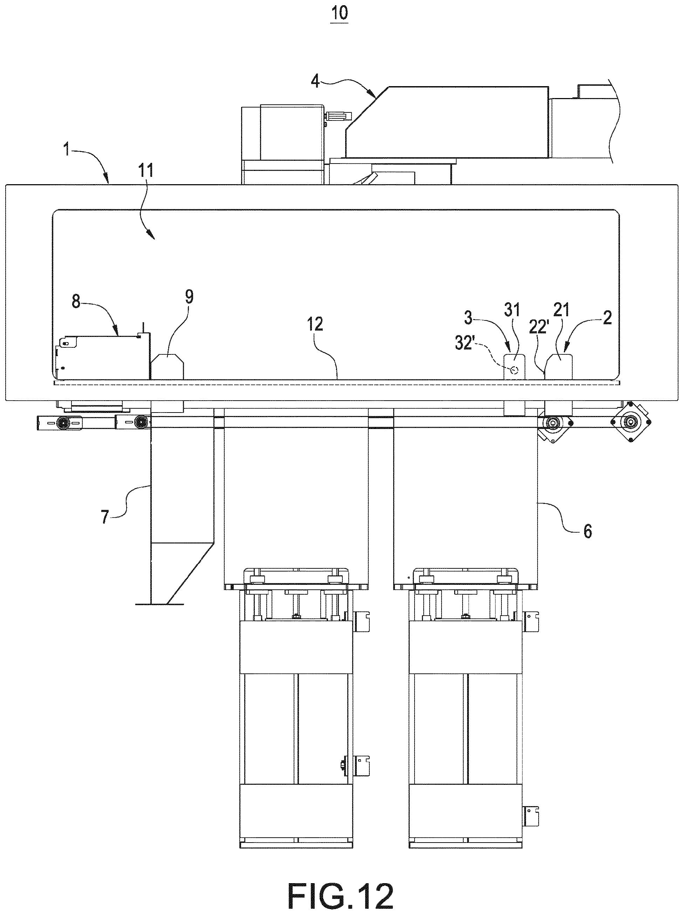

With reference to FIGS. 11 and 12 for a 3D laser printer in accordance with the third and fourth embodiment of this disclosure respectively, the third and fourth embodiments are substantially the same as the first embodiment, except that the structure of the powder paving mechanism 2 and the structure of the mobile preheating mechanism 3 of these two embodiments are different from that of the first embodiment.

Further, the powder paving mechanism 2 includes a first moving seat 21 and a powder paving module 22' installed at the first moving seat 21 and moved with the first moving seat 21, and the mobile preheating mechanism 3 includes a second moving seat 31 and a heating element 32' installed at the second moving seat 31 and moved with the second moving seat 31, and the heating element 32' is provided for heating the powder to be sintered 100 to a temperature slightly lower than the melting point of the powder to be sintered 100. Unlike the powder paving mechanism 2 and the mobile preheating mechanism 3 of the first embodiment that must be moved together, the powder paving mechanism 2 and the mobile preheating mechanism 3 of the fourth embodiment may be moved individually.

Wherein, the first moving seat 21 and the second moving seat 31 of this embodiment are accommodated in the chamber 11 and reciprocately moved between the feeding machine 13 and the construction machine 14. In other words, the powder paving mechanism 2 and the mobile preheating mechanism 3 are reciprocately moved between the feeding machine 13 and the construction machine 14. However, this disclosure is not limited to such arrangement only. The mobile preheating mechanism 3 of this disclosure may be used for heating at least one of the feeding machine 13 and the construction machine 14, and does not heat the whole chassis chamber as the conventional heating device does.

In addition, the powder paving mechanism 2 of the third embodiment is disposed between the mobile preheating mechanism 3 and the construction machine 14 to achieve the effect of paving the powder to be sintered 100 first and then heating the powder to be sintered 100. The mobile preheating mechanism 3 of the fourth embodiment is disposed between the powder paving mechanism 2 and the construction machine 14 to achieve the effect of heating the powder to be sintered 100 first and then paving the powder to be sintered 100.

## Claims

1. A 3D laser printer, comprising:
a body (1), having a chamber (11) formed therein, a carrying platform (12) disposed in the chamber (11), and a feeding machine (13) and a construction machine (14) capable of ascending or descending with respect to the carrying platform (12);
a powder paving mechanism (2), accommodated in the chamber (11), and capable of moving reciprocately between the feeding machine (13) and the construction machine (14);
a mobile preheating mechanism (3), accommodated in the chamber (11), and capable of moving reciprocately in at least one of the feeding machine (13) and the construction machine (14); and
a laser module (4), configured to be corresponsive to the construction machine (14).

2. The 3D laser printer of claim 1, wherein the powder paving mechanism (2) and the mobile preheating mechanism (3) jointly include a moving seat (5), and the powder paving mechanism (2) further includes a powder paving module (22) installed at the moving seat (5) and moved with the moving seat (5), and the mobile preheating mechanism (3) further includes a heating element (32) installed at the moving seat (5) and moved with the moving seat (5).

3. The 3D laser printer of claim 1, wherein the powder paving mechanism (2) includes a first moving seat (21) and a powder paving module (22') installed at the first moving seat (21) and moved with the first moving seat (21), and the mobile preheating mechanism (3) includes a second moving seat (31) and a heating element (32') installed at the second moving seat (31) and moved with the second moving seat (31).

4. The 3D laser printer of claim 3, wherein the mobile preheating mechanism (3) can be reciprocately moved between the feeding machine (13) and the construction machine (14).

5. The 3D laser printer of claim 2 or 3, wherein the powder paving module (22, 22') includes a powder roller (221) and a driver (222) coupled to the powder roller (221) for driving the powder roller (221) to roll.

6. The 3D laser printer of claim 2 or 3, further comprising a color printing module (8) and a cooling mechanism (9), and the color printing module (8) being accommodated in the chamber (11) and moved on the construction machine (14), and the color printing module (8) having a color printer head (81), and the cooling mechanism (9) being installed between the color printing module (8) and the feeding machine (13), moved on the construction machine (14), and configured to be corresponsive to the construction machine (14).

7. An operation method of a 3D laser printer, comprising the steps of:
(a) providing a powder to be sintered (100) and a body (1), wherein the body (1) has a chamber (11) formed therein, a carrying platform (12) disposed in the chamber (11), and a feeding machine (13) and a construction machine (14) capable of ascending or descending with respect to the carrying platform (12); and stacking the powder to be sintered (100) onto the feeding machine (13);
(b) providing a powder paving mechanism (2) accommodated in the chamber (11) and reciprocately moved between the construction machine (14) and the feeding machine (13) and provided for paving the powder to be sintered (100) smoothly onto the construction machine (14) from the feeding machine (13);
(c) providing a mobile preheating mechanism (3) accommodated in the chamber (11) and reciprocately moved in at least one of the feeding machine (13) and construction machine (14), and provided for heating the powder to be sintered (100) to a temperature slightly lower than the melting point of the powder;
(d) providing a laser module (4) configured to be corresponsive to the construction machine (14), and provided for heating the powder to be sintered (100) to the melting point of the powder to be sintered (100) according to a required figure to sinter the powder to be sintered (100) into a construction layer (200);
(e) descending the construction machine (14) with respect to the carrying platform (12) until the powder to be sintered (100) is paved smoothly onto the construction machine (14); and
(f) repeating the step (a) to the step (e) to form a finished product through stacking the plurality of construction layers (200) with one another.

8. The operation method of a 3D laser printer according to claim 7, further comprising a step d03 after the step (d), wherein the step d03 comprises providing a color printing module (8) accommodated in the chamber (11) and moved onto the construction machine (14), and the color printing module (8) has a color printer head (81) provided for coloring the construction layer (200) according to the required color and position.

9. The operation method of a 3D laser printer according to claim 8, further comprising a step d01 between the step (d) and the step d03, wherein the step d01 comprises providing a cooling mechanism (9) installed between the color printing module (8) and the feeding machine (13) and moved onto the construction machine (14) and configured to be corresponsive to the construction machine (14) for cooling the construction layer (200).

10. The operation method of a 3D laser printer according to claim 8, further comprising a step d02 between the step (d) and the step d03, wherein the step d02 comprises providing a receiving mechanism (7) configured to be corresponsive to the construction machine (14) for recycling the powder to be sintered (100) which has not been sintered.

11. The operation method of a 3D laser printer according to claim 7, wherein the order of the step (b) and the step (c) is interchangeable, and when the mobile preheating mechanism (3) is configured to be corresponsive to the construction machine (14), the step (c) is arranged behind the step (b), and when the mobile preheating mechanism (3) is configured to be corresponsive to the feeding machine (13), the step (c) is arranged before the step (b).

12. The operation method of a 3D laser printer according to claim 7, wherein the powder paving mechanism (2) and the mobile preheating mechanism (3) as described in the step (b) and the step (c) jointly include a moving seat (5), and the powder paving mechanism (2) further comprises a powder paving module (22) installed at the moving seat (5) and moved with the moving seat (5), and the mobile preheating mechanism (3) further comprises a heating element (32) installed at the moving seat (5) and moved with the moving seat (5) and the heating element (32) is provided for heating the powder to be sintered (100) to a temperature slightly lower than the melting point of the powder to be sintered (100).

13. The operation method of a 3D laser printer according to claim 7, wherein the powder paving mechanism (2) as described the step (b) includes a first moving seat (21) and a powder paving module (22') installed at the first moving seat (21) and moved with the first moving seat (21), and the mobile preheating mechanism (3) as described in the step (c) includes a second moving seat (31) and installed at the second moving seat (31) and a heating element (32') moved with the second moving seat (31), and the heating element (32') is provided for heating the powder to be sintered (100) to a temperature slightly lower than the melting point of the powder to be sintered (100).

14. The operation method of a 3D laser printer according to claim 13, wherein the mobile preheating mechanism (3) is reciprocately moved between the feeding machine (13) and the construction machine (14).

15. The operation method of a 3D laser printer according to claim 12 or 13, wherein the mobile preheating mechanism (3) includes a heating element (32, 32'), and the heating element (32, 32') is a radiant heat source, and the radiant heat source is an infrared light source or an electric heating tube, and the spacing between the infrared light source and the powder to be sintered (100) is smaller than 10mm.
